Europäisches Patentamt

(19) European Patent Office

Office européen des brevets

(11) Veröffentlichungsnummer: **0 235 349**
**B1**

(12) EUROPÄISCHE PATENTSCHRIFT

(45) Veröffentlichungstag der Patentschrift:
07.02.90

(51) Int. Cl.⁵: **B 60 R 25/08**

(21) Anmeldenummer: 86112304.0

(22) Anmeldetag: 05.09.86

(54) Schloss für Handbremshebel von Kraftfahrzeugen.

(30) Priorität: 24.01.86 AT 170/86

(43) Veröffentlichungstag der Anmeldung:
09.09.87 Patentblatt 87/37

(45) Bekanntmachung des Hinweises auf die Patenterteilung:
07.02.90 Patentblatt 90/06

(84) Bennante Vertragsstaaten:
AT BE CH DE FR GB IT LI LU NL SE

(56) Entgegenhaltungen:
DE-C-808 529
FR-A-512 326
FR-A-635 796
GB-A-1 088 853

POPULAR SCIENCE, März 1987, Seite 38; J. KEEBLER: "What's new for your car"

(73) Patentinhaber: Spiral Autojavito Vallalat
Szabolcs u. 32-34
H-1134 Budapest (HU)

(72) Erfinder: Balina, Istvan
Szerdahelyi u.12
H-1086 Budapest (HU)
Erfinder: Kokai, Jozsef
Kapaszkodo u.14a
H-1038 Budapest (HU)
Erfinder: Biro, Lajos
Jozsef attila utca 38/a
H-2011 Budakalasz (HU)
Erfinder: Torba, Lajos
Ond vezer u.25
H-1144 Budapest (HU)

(74) Vertreter: Patentanwälte Viering & Jentschura
Steinsdorfstrasse 6
D-8000 München 22 (DE)

## Beschreibung

Die Erfindung bezieht sich auf ein Schloß für Handbremshebel von Kraftfahrzeugen mit einer an dem Handbremshebel angeschlossenen Hülse, einem darin bewegbaren, an einem Druckknopf des Handbremshebels angeschlossenen Auslöseglied und einer die Bewegung des Auslösegliedes im geschlossenen Zustand verhindernden Sperrvorrichtung.

Unter den vielen Einrichtungen und Lösungen, die die Erschwerung der unbefugten Benutzung der Kraftwagen bezwecken, können sich die Schlösser für Handbremshebel der Kraftwagen einer großen Beliebtheit wegen ihrer Einfachheit und leichten Anwendbarkeit erfreuen. Die Hülse dieser Schlösser ist auf den Hebel der Handbremse geschoben und daran befestigt. Das Auslöseglied liegt auf dem Druckknopf der Handbremse auf. Im geschlossenen Zustand des Schlosses kann das Auslöseglied des Schlosses nicht eingedrückt werden, wodurch die von dem Handbremshebel betätigte Haltebremse des Kraftwagens nicht gelöst werden kann. Zum Verhindern des Verschiebens des Auslösegliedes wird eine Sperrvorrichtung des Schlosses angewendet, die mit verdrehbaren Nummernscheiben versehen ist. Durch Verdrehen der Nummernscheiben in die geöffnete Stellung der Sperrvorrichtung in einer gegebenen Kombination der Nummern wird das Auslöseglied zum Lösen der Handbremse freigegeben. Ein Schloß dieser Art ist z. B. in der GB-AS-1 088 853 beschrieben.

In der Praxis hat sich jedoch gezeigt, daß die Sicherheit der bekannten Schlösser für Handbremshebel nicht zufriedenstellend ist. Mit feinem Fingerspitzengefühl, ausreichend Geschick und Geduld können diese Schlösser mit Zahlenkombinationen geöffnet werden. Dabei kann gefühlt werden, wann die Nummernscheibe in die geöffnete Stellung kommt, da ein gewisses Spiel zwischen den zueinander beweglichen Teilen unerläßlich notwendig ist.

Die bekannten Schlösser sind noch mit dem Nachteil behaftet, daß sie die internationalen Vorschriften der EG nicht erfüllen. Nach diesen Vorschriften darf das Lösen der Haltebremse eines Kraftwagens während des Betriebes durch keinerlei Mechanismen oder Teile verhindert werden. Im Falle der bekannten Schlösser kann es jedoch dazu kommen, daß die Nummernscheiben aus der dem geöffneten Zustand der Sperrvorrichtung des Schlosses entsprechenden Position mit der Hand oder mit einem anderen Gegenstand, wie z. B. einer Tasche oder einem Kleidungsstück, unabsichtlich oder ungewollt verdreht werden. In einer Gefahrensituation, wenn z. B. die Betriebsbremsen des Kraftwagens fehlerhaft geworden oder ausgefallen sind, kann es dazu kommen, daß die Handbremse mehrmals nacheinander eingezogen und gelöst werden muß. Wenn inzwischen mindestens eine der Nummernscheiben aus dem geöffneten Zustand verstellt wird, kann die einmal angezogene Handbremse nicht sofort gelöst werden, was die Unfallgefahr unerträglich erhöht.

Durch die Erfindung wird dementsprechend die Aufgabe gelöst, ein Schloß für Handbremshebel von Kraftwagen zu schaffen, dessen Diebstahl- und Betriebssicherheit erhöht ist und das auch die internationalen Sicherheitsvorschriften und -empfehlungen erfüllt. Diese Aufgabe soll mit möglichst einfachen Mitteln gelöst werden, um die unkomplizierte Konstruktion der Schlösser und die anderen Vorteile der bekannten Lösungen beibehalten zu können.

Erfindungsgemäß wird die gestellte Aufgabe durch die Weiterentwicklung gelöst, daß dem Auslöseglied ein die Sperrvorrichtung nach Lösen der Handbremse im geöffneten Zustand arretierender und das Verstellen dieses Zustandes verhindernder Mechanismus zugeordnet ist.

In einer erfindungsgemäß vorteilhaften Ausführungsform kann dies erreicht werden, wenn der das Verstellen der Sperrvorrichtung verhindernde Mechanismus eine Kappe und einen damit in Arretierstellung zusammen wirkenden, an dem Gehäuse des Schlosses vorgesehenen Vorsprung aufweist, wobei die Kappe und der Vorsprung zueinander beweglich ausgebildet sind. In diesem Falle können wir vorsehen, daß der Vorsprung an einem der Kappe zugewandten Ende der Hülse ausgebildet ist und die Kappe eine Kante aufweist, wobei der Vorsprung und die Kante als sich über die Hälfte der Umfanges der Kappe bzw. der Hülse hin erstreckendes Gewinde mit großer Gewindesteigung ausgebildet sind und das Halbgewinde des Vorsprungs mit dem Halbgewinde der Kappe in Arretierstellung zusammenwirkend ausgeführt ist. Am Ende des Halbgewindes kann auf den zueinander bewegbaren Flächen des Vorsprungs und der Kante eine das Verdrehen erschwerende Stufe ausgebildet sein.

Erfindungsgemäß ist auch eine Ausführungsform vorteilhaft, bei der die Gewindesteigung des Halbgewindes des Vorsprungs und der Kante in Achsenrichtung kleiner ist als die Dicke einer Nummernscheibe der Sperrvorrichtung.

In einer weiteren vorteilhaften Ausführungsform kann der Mechanismus so ausgebildet sein, daß zwischen der ersten Nummernscheibe der Sperrvorrichtung und dem Gehäuse des Schlosses koaxial zu den Nummernscheiben eine Arretierscheibe verdrehbar angeordnet ist, die eine in Arretierstellung an einem der Sperrzapfen der Sperrvorrichtung anliegende Schulter aufweist, wobei die ringförmige Schulter sich über die Hälfte der Sperrscheibe hin erstreckt und eine geringere Dicke hat, als die Dicke einer Nummernscheibe. Die Arretierscheibe kann dabei mit geriffeltem Außenumfang versehen sein.

Bei einer weiteren erfindungsgemäß vorteilhaften Ausführungsform ist bei dem dem Druckknopf des Handbremshebels zugewandten Ende des Auslösegliedes ein Arretierbolzen in einem zur Längsachse senkrechten Durchgangsloch angeordnet, wobei der Arretierbolzen in Arretierstellung an dem inneren Ende einer in der Hülse des Schlosses ausgebildeten Längsnut aufliegt und

3

mit einem von außen betätigbaren Lösebolzen zum Hinausschieben aus der Längsnut zusammen wirkt. Dabei ist es vorteilhaft, wenn der Arretierbolzen einen Kopf mit seinen übrigen Teil überschreitendem Durchmesser aufweist, der in Arretierstellung auf einer Durchmesserinnenstufe des Durchgangsloches aufliegt und von einer Druckfeder belastet ist. Es kann dabei so vorgegangen werden, daß der von außen betätigbare Lösebolzen bei dem inneren Ende der Längsnut in einem auch durch den Griff des Handbremshebels durchgehenden Loch angeordnet ist, wobei das äußere Ende des Lösebolzens knopfartig in einer Auswölbung des Griffes vorgesehen ist und der Bolzen von einer Druckfeder in Richtung zu der Auswölbung hin belastet ist. Die auf den Arretierbolzen ein wirkende Druckkraft kann durch Veränderung der Vorspannung der Druckfeder eingestellt werden.

Erfindungsgemäß ist es vorteilhaft, wenn die Nummernscheiben der Sperrvorrichtung mit den Sperrzapfen der Sperrvorrichtung mindestens teilweise aufnehmen den, aber deren Durchschieben verhindernden Scheintoren versehen sind.

Nach einer weiteren vorteilhaften Ausführungsform ist zwischen der ersten Nummernscheibe der Sperrvorrichtung und dem Gehäuse des Schlosses, koaxial zu den Nummernscheiben eine von einer Druckfeder, die in eine Aussparung des Gehäuses eingesetzt ist, radial verdrehbare Arretierscheibe angeordnet, in deren stirnseitige Nut der erste Sperrzapfen des Auslösegliedes eingreift, und die Arretierscheibe ist mit einem radialen Betätigungshebel versehen, der durch ein Betätigungsfenster des Schlosses hindurchragt.

Nach einer weiteren bevorzugten Ausführungsform ist das Auslöseglied als auf den Handbremshebel aufsteckbare Hülse ausgebildet, die in einem Betätigungsknopf endet, an dessen Innenseite der ursprüngliche Druckknopf der Handbremse aufliegt. Ebenso vorteilhaft ist jene Ausführungsform, bei der das Auslöseglied als auf den Handbremshebel aufsteckbare Hülse ausgebildet ist, die in einem Betätigungsknopf endet und von einer im Inneren der Hülse des Schlosses angeordneten Druckfeder ständig belastet ist.

Nach einer weiteren bevorzugten Ausführungsform ist das erfindungsgemäße Schloß über eine Einweg-Rohrschnelle am Handbremshebel unlösbar befestigt.

Für manche Fahrzeugtypen ist es vorteilhaft, wenn das erfindungsgemäße Schloß mit einer Zwischenhülse für Handbremshebel mit kleinerem Durchmesser versehen ist.

Nach einer weiteren bevorzugten Ausführungsform weisen die Nummernscheiben an ihren Stirnseiten mit der Numerierung der Nummernscheiben gleichzahlige und gleich angeordneten radiale Vertiefungen auf, die mit neben den Nummernscheiben zu diesen koaxial angeordneten und zur Sicherung der eingestellten Lagen der Nummernscheiben dienenden, je einen Vorsprung aufweisenden Ringfedern zusammen wirken.

4

Die Erfindung wird anhand von Ausführungsbeispielen unter Bezugnahme auf die Zeichnungen erläutert. In der Zeichnung zeigen:

Fig. 1 den Halbschnitt eines ersten Ausführungsbeispieles in Grundstellung,

Fig. 2 dieselbe Darstellung in Arretierstellung,

Fig. 3 den Halbschnitt eines weiteren Ausführungsbeispieles in Grundstellung,

Fig. 4 dieselbe Ausführungsform in Arretierstellung,

Fig. 5 den Schnitt eines Teiles einer weiteren Ausführungsform in Grundstellung

Fig. 6 den Schnitt der Ausführungsform aus Figur 5 in Arretierstellung,

Fig. 7 den Schnitt der Ausführungsform aus Figur 5 während des Lösens der Arretierstellung,

Fig. 8 die Ansicht einer erfindungsgemäß ausgebildeten Nummernscheibe,

Fig. 9 einen Längsschnitt einer weiteren Ausführungsform in Grundstellung,

Fig. 10 einen Querschnitt durch das Schloß entlang der Linie X - X,

Fig. 11 einen Schnitt durch das Schloß entlang der Linie XI - XI,

Fig. 12 einen Querschnitt durch das Schloß in Arretierstellung entlang der Linie XII - XII,

Fig. 13 einen Schnitt durch das Schloß entlang der Linie XIII - XIII,

Fig. 14 die unlösbare Befestigung des Schlosses an dem Handbremshebel gemäß einem Querschnitt entlang der Linie XIV - XIV,

Fig. 15 eine weitere Ausführungsform mit dem Betätigungsfenster und einer Zwischenhülse, teilweise geschnitten, und

Fig. 16 einen Schnitt durch das Schloß aus Figur 9 entlang der Linie XVI - XVI.

Eine Hülse 3 des Schlosses 1 ist auf den Handbremshebel 2 geschoben und daran in geeigneter Weise, z. B. mit hier nicht gezeigten Schrauben festgelegt. In der Hülse 3 ist ein längsverschiebbares Auslöseglied 4 angeordnet, über welches ein Druckknopf 5 der Handbremse betätigt werden kann. Am anderen Ende des Auslösegliedes 4 ist mit einer Schraube 6 eine Kappe 7 befestigt, die als Betätigungsorgan des Schlosses 1 dient.

Dem Auslöseglied 4 ist, wie bei solchen Schlössern üblich, eine Sperrvorrichtung 8 zugeordnet, die zum Verhindern des Bewegens des Auslösegliedes 4 im geschlossenen Zustand dient (s. z. B. GB-A-1 088 853). Dazu sind in dem Auslöseglied 4 Sperrzapfen 9 befestigt, die jeweils mit einer Nummernscheibe 10 zusammenwirken. Die Nummernscheiben 10 sind jeweils mit einem geriffelten Außenumfang versehen, wodurch sie leichter verdreht werden können. Damit können die in den Nummernscheiben 10 vorhandenen Tore 11, die als Durchbrüche ausgebildet sind, jeweils zu einem Sperrzapfen 9 gedreht werden, wodurch das Auslöseglied für seine Längsverschiebung freigegeben wird.

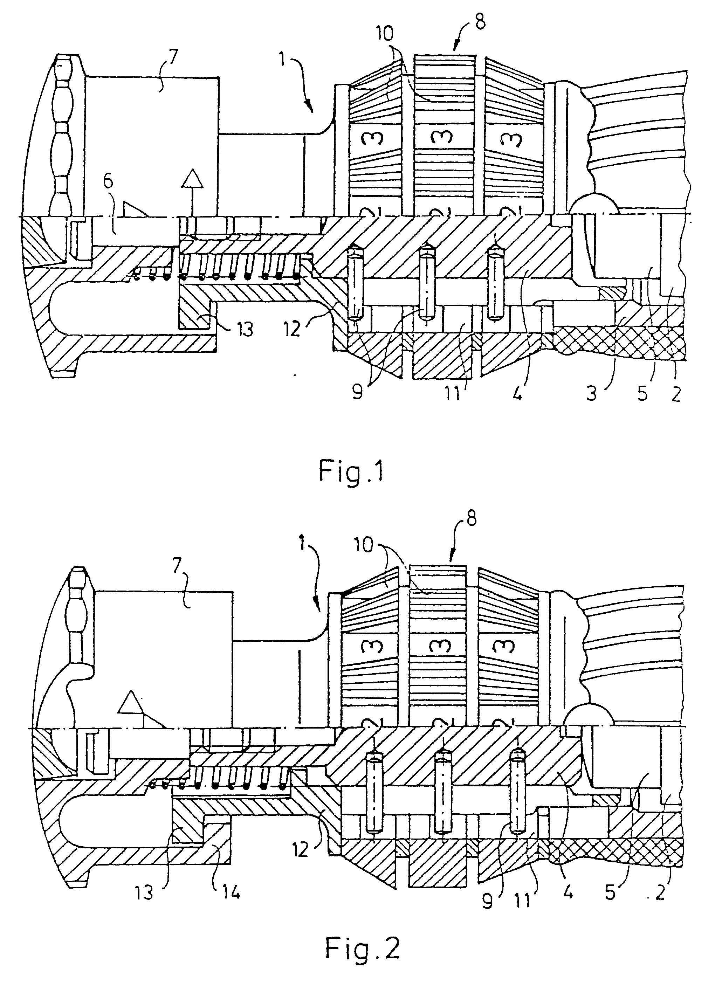

In Fig. 1 ist das Schloß 1 in Grundstellung dargestellt, wobei das Lösen der Handbremse durch Verschieben des Auslösegliedes 4 und Betätigen des Druckknopfes 5 ermöglicht wird. Dabei können aber die in der Einleitung erwähnten Nachteile der vorbekannten Lösungen, z. B. das unbeabsichtigte Verstellen der Nummernscheiben 10 entstehen. Zur Verhinderung dieses Nachteiles ist das erfindungsgemäße Schloß 1 mit einem die Sperrvorrichtung nach Lösen der Handbremse im geöffneten Zustand arretierenden und ihr Verstellen aus diesem geöffneten Zustand verhindernden Mechanismus versehen. In der Ausführungsform aus Fig. 1 ist hierzu an einem mit der Hülse 3 verbundenen Gehäuse 12 ein Vorsprung 13 ausgebildet, der die Form eines sich über die Hälfte des Umfangs des Gehäuses 12 hin erstreckenden Halbgewindes hat. Damit zusammenwirkend ist an der Kappe 7 eine Kante 14 ausgeformt, die als Teil des Arretiermechanismus ebenfalls die Form eines sich über die Hälfte des Umfanges der Kappe 7 hin erstreckenden Halbgewindes hat (Fig. 2).

In Fig. 2 ist das erfindungsgemäße Schloß 1 in arretierter Stellung dargestellt, wobei die Halbgewinde des Vorsprungs 13 und der Kante 14 aneinander anliegen. Diese Stellung kann im gelösten Zustand der Sperrvorrichtung 8 durch Einschieben der Kappe 7 und dadurch des Auslösegliedes 4 und gleichzeitiges Verdrehen der Kappe 7 erreicht werden. Damit wird das Auslöseglied in geringfügig eingeschobener Stellung festgelegt, wodurch aber die Sperrzapfen 9 sich schon innerhalb der Tore 11 befinden. In dieser Stellung können die Nummernscheiben 10 der Sperrvorrichtung 8 nicht verstellt werden, auch nicht mit Absicht; die Sperrvorrichtung 8 ist also im geöffneten Zustand arretiert.

Wie aus Fig. 2 ersichtlich, genügt das Eindrücken des Auslösegliedes 4 in die arretierte Stellung nicht, um auch den Druckknopf 5 des Handbremshebels 2 einzudrücken und damit die Handbremse des Fahrzeugs zu lösen. In dieser arretierten Stellung kann also die Handbremse mehrfach betätigt werden, ohne daß die Sperrvorrichtung 8 verstellt und damit das Lösen in dieser Situation unmöglich gemacht wird.

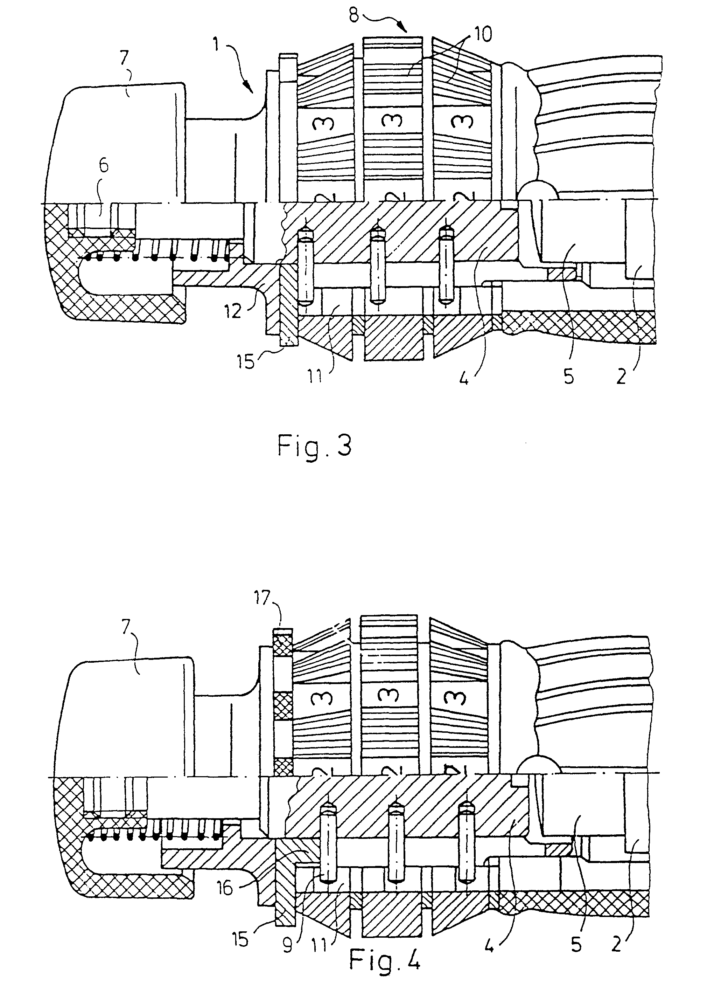

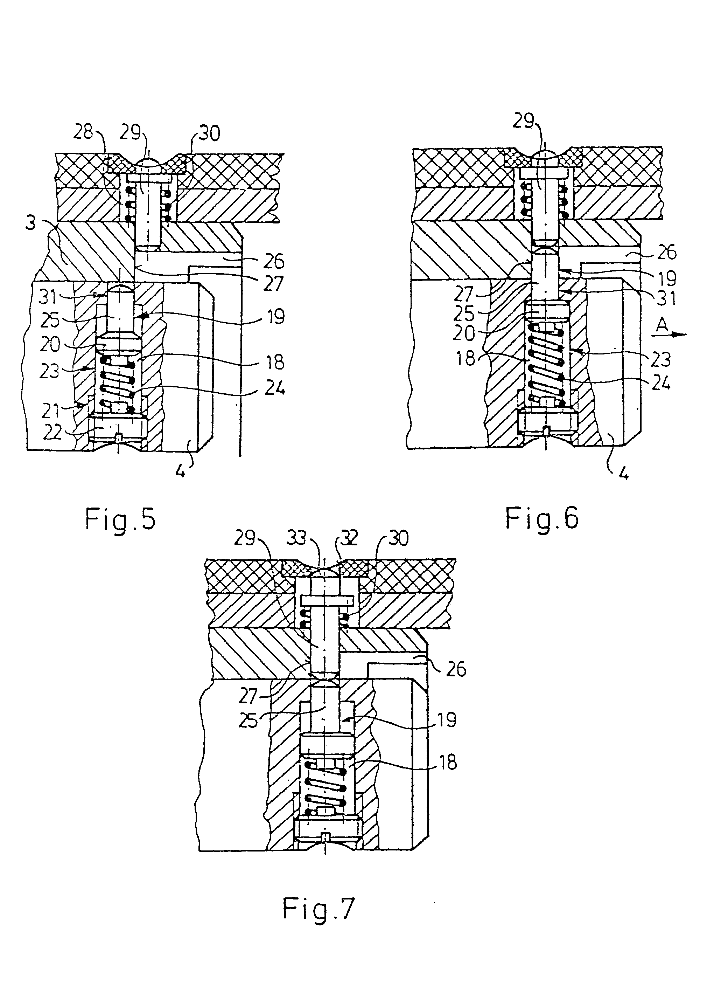

Eine andere Lösung zum gleichen Zwecke ist als eine weitere Ausführungsform der Erfindung in Fig. 3 dargestellt. Hierbei weichen die Ausführung der mit der Schraube 6 an dem Auslöseglied 4 befestigten Kappe 7 und des Gehäuses 12 etwas von der vorherigen ab: es sind kein Vorsprung 13 und keine Kante 14 vorhanden. Zwischen der von der Kappe 7 aus gesehen ersten Nummernscheibe 10 und dem Gehäuse 12 ist aber eine Arretierscheibe 15 vorhanden, die koaxial zu den Nummernscheiben 10 verdrehbar angeordnet ist. An der dem Sperrzapfen 9 der ersten Nummernscheibe 10 zugewandten Fläche der Arretierscheibe 15 ist eine Schulter 16 ausgebildet, die sich über die Hälfte des Umfangs der Arretierscheibe 15 hin an diesem Durchmesser erstreckt (Fig. 4). Die Dicke der Schulter 16 ist dabei geringer als die Dicke einer Nummernscheibe 10. Die Arretierscheibe 15 ist mit einer Riffelung 17 versehen, wodurch das Verdrehen der Arretierscheibe 15 erleichtert wird.

In Fig. 3 sind die Tore 11 der Nummernscheiben 10 auf eine Linie eingestellt, so daß die Sperrvorrichtung 8 in gelöster Stellung ist. Die Kappe 7 und damit das Auslöseglied 4 können nun eingedrückt werden, wonach die Arretierscheibe 15 aus der Stellung in Fig. 3 in die in Fig. 4 gezeigte Arretierstellung gedreht werden kann. Dadurch werden die Sperrzapfen 9 in den Toren 11 der Nummernscheiben 10 gehalten und wird deren Verdrehung entgegengewirkt. Das Verschieben des Auslösegliedes 4 in diese Arretierstellung ist nicht ausreichend, um dieses mit dem Druckknopf 5 der Handbremse in Berührung zu bringen, so daß das Anziehen der Handbremse dadurch nicht beeinflußt wird.

In den Figuren 5 bis 7 ist der Arretiermechanismus in einer weiteren Ausführungsform dargestellt, wobei nur ein Teil des Schlosses 1, nämlich das dem Druckknopf 5 der Handbremse zugewandte Ende des Auslösegliedes 4 im Schnitt und mit Ausbruch gezeigt wird. Dabei ist ein Durchgangsloch 18 mit zur Längsachse des Auslösegliedes 4 senkrechter Achse ausgebildet, worin ein Arretierbolzen 19 angeordnet ist. Das Durchgangsloch 18 hat einen ersten Abschnitt 21 mit Gewinde, in welcher eine Schraube 22 eingeschraubt ist. In dem nachfolgenden zweiten Abschnitt 23 mit kleinerem Durchmesser ist ein Kopf des Arretierbolzens 19 geradegeführt. Zwischen der Schraube 22 und dem Kopf 20 ist in dem Durchgangsloch 18 eine Druckfeder 24 angeordnet. Der Arretierbolzen 19 hat auch einen Schaft 25, der seinerseits in einem dritten Bohrungsabschnitt 31 mit noch kleinerem Durchmesser geführt ist.

In der Hülse 3 des Schlosses 1 ist eine Längsnut 26 ausgeformt, von deren inneren Ende 27 die Arretierstellung bestimmt wird. An dieser Stelle ist in der Hülse sowie in dem Griff des Schlosses 1 ein Durchgangsloch 28 vorgesehen, in dem ein von außen betätigbarer Lösebolzen 29 angeordnet ist. Der Lösebolzen 29 kann gegen die Kraft einer Druckfeder 30 in die Längsnut 26 von außen hin eingedrückt werden.

Die in Fig. 5 gezeigte Stellung entspricht der Sperrstellung des Schlosses 1, wobei das abgerundete Ende des Arretierbolzens 19 auf der Innenfläche der Hülse 3 aufliegt. In Arretierstellung (Fig. 6) zwingt die Druckfeder 24 den Arretierbolzen 19 aus dem Durchgangsloch 18 hinaus und in die Längsnut hinein. Dabei liegt der Kopf 20 des Arretierbolzens 19 an der inneren Durchmesserstufe zwischen dem zweiten und dem dritten Abschnitt 23 bzw. 31 des Durchgangsloches 18 auf. Eine weitere Bewegung des Auslösegliedes 4 ist in Richtung des Druckknopfes der Handbremse (Pfeil A) nicht behindert, da der Schaft 25 des Arretierbolzens 19 in dieser Richtung frei beweglich ist. Eine rückwärts gerichtete Bewegung ist jedoch durch das Aufliegen des Schaftes 25 an dem inneren Ende 27 der Längsnut 26 verhindert, wodurch der Aufenthalt der Sperrzapfen 9 des Auslösegliedes 4 in den Toren 11 der Nummernscheiben 10 (s. dazu Fig. 2 oder 4) erreicht wird.

Das Lösen dieser Arretierstellung erfolgt mit Hilfe des Lösebolzens 29. Wie schon erwähnt, liegt der Schaft 25 des Arretierbolzens 19 am Ende 27 der Längsnut 26 auf, wobei der Arretierbolzen 19 mit dem Lösebolzen 29 gleichachsig ist. Das aus dem Griff bei einer Auswölbung 32 hinausragende abgerundete Ende 33 des Lösebolzens 29 wird dabei eingedrückt, womit auch der Arretierbolzen 19 in das Durchgangsloch 18 zurückgeschoben wird. Nach Erreichen der Innenfläche der Hülse 3 kann das abgerundete Ende des Arretierbolzens 19 daran frei gleiten, wodurch die Sperrzapfen 9 die Tore 11 der Nummernscheiben 10 verlassen und die Sperrstellung des Schlosses 1 erreicht wird. Die auf den Arretierbolzen 19 einwirkende Druckkraft kann mit der Schraube 22 eingestellt werden.

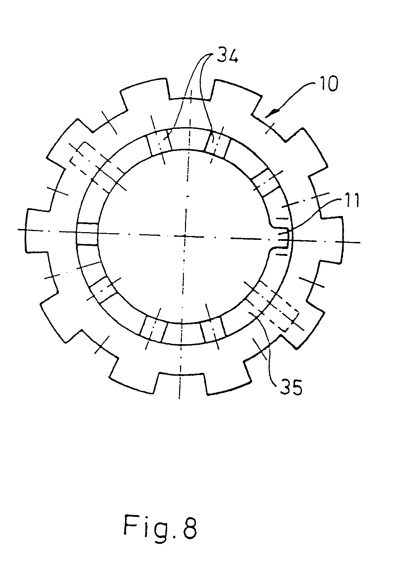

Zur Erhöhung der Sicherheit des Schlosses 1 nach dieser Erfindung sind an den Nummernscheiben 10 sog. Scheintore 34 vorgesehen, wie dies an einer in Fig. 8 gesondert dargestellten Nummernscheibe 10 ersichtlich ist. Die Scheintore 34 sind in einer Ringfläche 35 der Nummernscheibe 10 ausgebildet, die die Sperrbolzen 9 nur teilweise aufnehmen können, das Durchschieben jedoch nicht ermöglichen. Damit wird verhindert, die Stellung des Tores 11 ohne das Kennen der Zahlenkombination von außen herauszufinden und in dieser Weise das Schloß 1 aufzumachen.

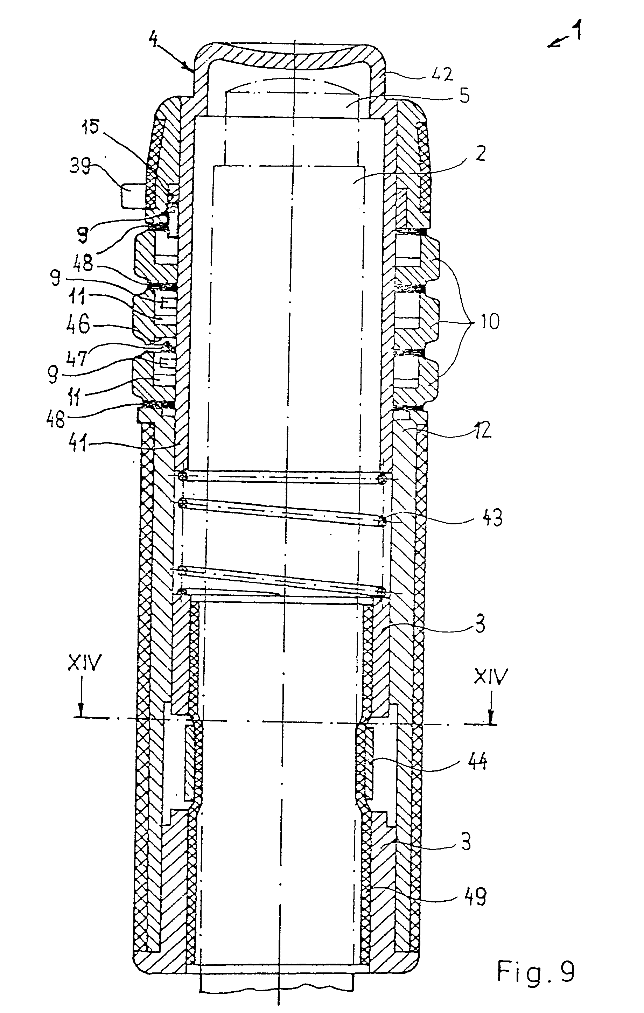

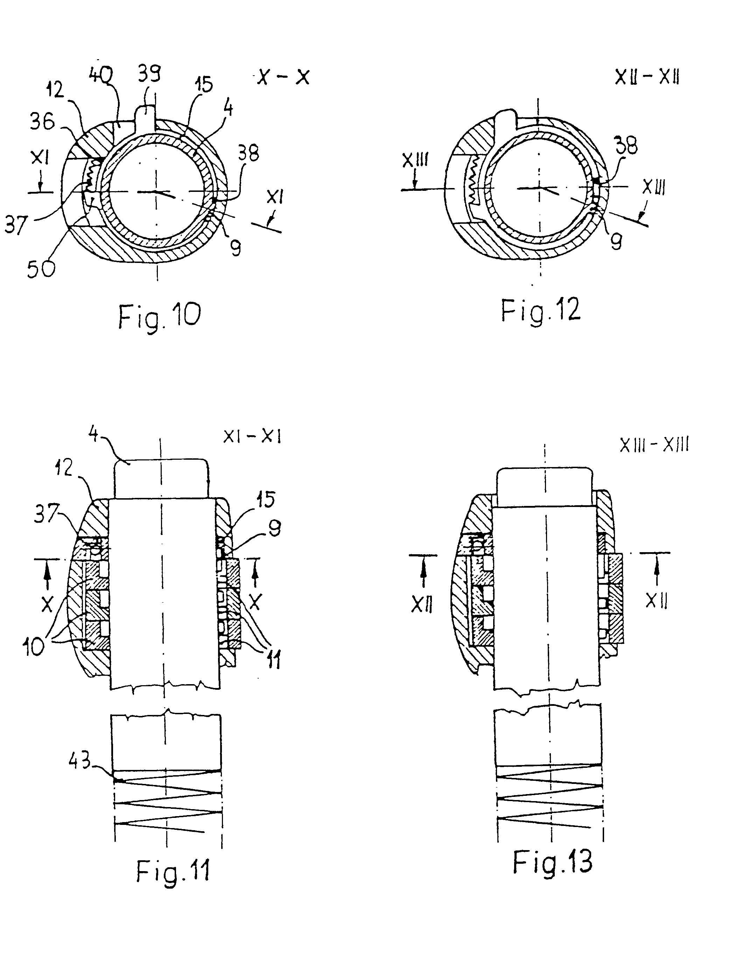

Eine weitere Ausführungsform des erfindungsgemäßen Schlosses ist in Figur 9 im Halbschnitt dargestellt. Hier ist das Auslöseglied 4 als Hülse 41 ausgebildet, die auf den Handbremshebel 2 aufgesteckt werden kann und die in einem Betätigungsknopf 42 endet. Das dargestellte Schloss 1 ist mit Hilfe einer eine innere Hülse 49 umgebenden speziellen, sogenannten Einweg-Rohrschelle 44 am Handbremshebel 2 unlösbar befestigt. Das Auslöseglied 4 ist von einer im Inneren der Hülse 3 des Schlosses 1 koaxial rings des Handbremshebels 2 angeordneten Druckfeder 43 ständig belastet. In dieser Grundstellung befinden sich die Sperrzapfen 9 außerhalb der Tore 11, so daß die Nummernscheiben 10 ungehindert verdreht werden können. Zum besseren Verständnis ist diese Lage in den Figuren 10 und 11 ausführlicher dargestellt. In eine Aussparung 36 des Gehäuses 12 des Schlosses 1 ist eine Druckfeder 37 eingesetzt, die an einem radial vorstehenden Ansatz 50 der Arretierscheibe 15 aufliegt. Ein radialer Betätigungshebel 39 dieser Arretierscheibe 15 ragt durch ein Betätigungsfenster 40 des Schlosses 1 hindurch und der erste Sperrzapfen 9 des Auslösegliedes 4 greift in eine stirnseitige Nut 38 der Arretierscheibe 15 ein, so daß diese unfähig ist, sich auf Einwirkung der Druckfeder 37 in radialer Richtung zu verdrehen. In der Fig. 11 ist sichtbar, daß der erwähnte erste Sperrzapfen 9 des Auslösegliedes 4 in axialer Richtung länger ist als der zweite und der dritte Sperrzapfen 9. Alle drei Sperrzapfen 9 befinden sich jedoch außerhalb der Tore 11 und die Nummernscheiben 10 können frei verdreht werden.

In den Fig. 12 und 13 ist das Schloß 1 in einer Lage dargestellt, in welcher ein ungewolltes Verdrehen der Nummernscheiben 10 verhindert ist. Diese Lage kann derart erreicht werden, daß der Betätigungsknopf 42 des Auslösegliedes 4 geringfügig eingedrückt wird, so daß der erste Sperrzapfen 9 die stirnseitige Nut 38 der Arretierscheibe 15 verläßt und die Druckfeder 37 die freigegebene Arretierscheibe 15 verdreht, bis der Betätigungshebel 39 an der gegenüberliegenden Kante des Betätigungsfensters 40 anschlägt. Jetzt befinden sich alle drei Sperrzapfen 9 des Auslösegliedes 4 innerhalb der Tore 11 der Nummernscheiben 10 (siehe Fig. 13), wodurch das Verdrehen der Nummernscheiben 10 verhindert ist.

Die Nummernscheiben 10 können für ihr Einstellen durch Rückstellen des Betätigungshebels 39 in dessen Ausgangslage freigegeben werden.

Nach einer anderen Ausführungsform enthält das erfindungsgemäße Schloß 1 keine separate Druckfeder 43, sondern das Schloß 1 wird bei der Montage so weit auf den Handbremshebel 2 aufgeschoben, bis der Druckknopf 5 auf der Innenseite des Betätigungsknopfes 42 in geöffnetem Zustand der Sperrvorrichtung 8 spürbar aufliegt. In diesem Fall übernimmt die Druckfeder des Druckknopfes 5 der Handbremse die Rolle der Druckfeder 43.

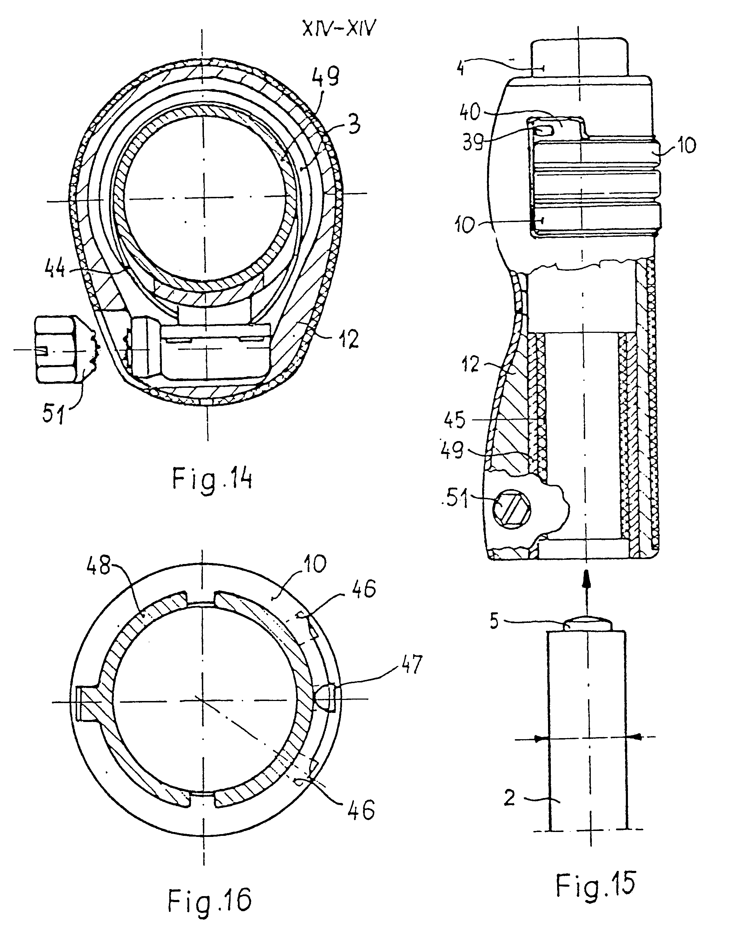

In Fig. 14 ist eine mögliche unlösbare Befestigung des Schlosses 1 an dem Handbremshebel dargestellt. Die innere Hülse 49 des Schlosses 1 ist von einer Rohrschelle 44 umgeben, deren Spannschraube derart dimensioniert ist, daß der Schraubenkopf nach erfolgtem Festziehen der Rohrschelle 44 einfach abbricht, so daß die Rohrschelle 44 nicht mehr gelöst werden kann.

Fig. 15 zeigt die Anordnung und Befestigung des Schlosses 1 an der Handbremse eines Fahrzeugs. Da der Handbremshebel 2 der Handbremse einen relativ kleinen Durchmesser hat, ist eine Zwischenhülse 45 zwischen den Handbremshebel 2 und die innere Hülse 49 des Schlosses 1 eingesetzt. Aus der Figur können die Ausbildung des Betätigungshebels 39 der Arretierscheibe 15 sowie die Nummernscheiben 10 entnommen werden. Am Gehäuse 12 des Schlosses 1 ist eine geeignete Öffnung für den freien Zugriff der Spannschraube 51 der Rohrschelle 44 ausgebildet.

Zum gut definierten Einstellen der Nummernscheiben 10 wurde eine vorteilhafte Rastanordnung geschaffen. Diese Rastanordnung besteht aus drei Ringfedern 48, die neben den Nummernscheiben 10 koaxial und verdrehsicher angeordnet sind, ferner aus radialen Vertiefungen 46, die an den Stirnseiten der Nummernscheiben 10 ausgebildet sind. Die Anzahl dieser Vertiefungen 46 ist mit der Anzahl der Nummern an den Nummernscheiben 10 gleich. Eine bevorzugte Ausführungsform einer solchen Ringfeder 48 ist aus Fig. 16 und die Anordnung der Ringfeder 48 aus Fig. 9 ersichtlich. Jede Ringfeder 48 weist einen Vorsprung 47 auf, der in entsprechender Stellung der zugehörigen Nummernscheibe 10 in deren Vertiefung 46 einrastet und dadurch die eingestellte Lage der Nummernscheibe 10 sichert.

Wie aus dem obigen ersichtlich, entspricht das erfindungsgemäß weiterentwickelte Schloß 1 den internationalen Sicherheitsvorschriften sowie auch den erhöhten Forderungen der alltäglichen Benutzung solcher Einrichtungen vollständig, wobei das Schloß 1 kaum über die ursprüngliche Länge der Handbremse hinausragt.

**Patentansprüche**

1. Schloß für Handbremshebel von Kraftfahrzeugen mit einer an dem Handbremshebel (2) angeschlossenen Hülse (3), einem darin bewegbaren, an einem Druckknopf (5) des Handbremshebels (2) angeschlossenen Auslöseglied (4) und einer die Bewegung des Auslösegliedes (4) im geschlossenen Zustand verhindern den Sperrvorrichtung (8), dadurch gekennzeichnet, daß dem Auslöseglied (4) ein die Sperrvorrichtung (8) nach Lösen der Handbremse im geöffneten Zustand arretierender und das Verstellen dieses Zustandes verhindernder Mechanismus zugeordnet ist.

2. Schloß nach Anspruch 1, dadurch gekennzeichnet, daß der die Verstellung der Sperrvorrichtung verhindernde Mechanismus eine Kappe (7) und einen mit dieser in Arretierstellung zusammen wirkenden, an dem Gehäuse (12) des Schlosses (1) vorgesehenen Vorsprung (13) aufweist, wobei die Kappe (7) und der Vorsprung (13) relativ zueinander beweglich ausgebildet sind.

3. Schloß nach Anspruch 2, dadurch gekennzeichnet, daß der Vorsprung (13) an dem der Kappe (7) zugewandten Ende der Hülse (3) ausgebildet ist und die Kappe (7) eine Kante (14) aufweist, wobei der Vorsprung (13) und die Kante (7) als sich über die Hälfte des Umfangs der Kappe (7) bzw. der Hülse (3) hin erstreckendes Gewinde mit großer Gewindesteigung ausgebildet sind und das Halbgewinde des Vorsprungs (13) mit dem Halbgewinde der Kappe (7) in Arretierstellung zusammenwirkend ausgeführt ist.

4. Schloß nach Anspruch 3, dadurch gekennzeichnet, daß auf den zueinander bewegbaren Flächen der Halbgewinde des Vorsprungs (13) und der Kante (14) eine die Verdrehung erschwerende Stufe ausgebildet ist.

5. Schloß nach Anspruch 3 oder 4, dadurch gekennzeichnet, daß die Gewindesteigung des Halbgewindes des Vorsprunges (13) und der Kante (14) in Achsenrichtung kleiner ist als die Dicke einer Nummernscheibe (10) der Sperrvorrichtung.

6. Schloß nach Anspruch 1, dadurch gekennzeichnet, daß zwischen der ersten Nummernscheibe (10) der Sperrvorrichtung (8) und dem Gehäuse (12) des Schlosses (1) koaxial zu den Nummernscheiben (10) eine Arretierscheibe (15) verdrehbar angeordnet ist, die eine in Arretierstellung an einem Sperrzapfen (9) der Sperrvorrichtung (8) anliegende Schulter (16) aufweist, wobei die ringförmige Schulter (16) sich über die Hälfte der Sperrscheibe hin erstreckt und eine geringere Dicke hat als die Dicke einer Nummernscheibe (10).

7. Schloß nach Anspruch 6, dadurch gekennzeichnet, daß die Arretierscheibe (15) mit einer äußeren Riffelung (17) versehen ist.

8. Schloß nach Anspruch 1, dadurch gekennzeichnet, daß bei dem dem Druckknopf (5) des Handbremshebels (2) zugewandten Ende des Auslösegliedes (4) ein Arretierbolzen (19) in einem zur Längsachse senkrechten Durchgangsloch (18) angeordnet ist, wobei der Arretierbolzen (19) in Arretierstellung an dem inneren Ende (27) einer in der Hülse (3) des Schlosses (1) ausgebildeten Längsnut (26) aufliegt und mit einem von außen betätigbaren Lösebolzen (29) zum Hinausschieben aus der Längsnut (26) zusammen wirkt.

9. Schloß nach Anspruch 8, dadurch gekennzeichnet, daß der Arretierbolzen (19) einen Kopf (20) mit seinen übrigen Teil überschreitendem Durchmesser aufweist, der in Arretierstellung auf einer Durchmesserinnenstufe des Durchgangsloches (18) aufliegt und von einer Druckfeder (24) belastet ist.

10. Schloß nach Anspruch 8 oder 9, dadurch gekennzeichnet, daß der von außen betätigbare Lösebolzen (29) bei dem inneren Ende (27) der Längsnut (26) in einem auch durch den Griff des Handbremshebels (2) durchgehenden Loch (28) angeordnet ist, wobei das äußere Ende (33) des Lösebolzens (29) knopfartig in einer Auswölbung (32) des Griffes vorgesehen ist und der Bolzen von einer Druckfeder (30) in Richtung zu der Auswölbung (32) hin belastet ist.

11. Schloß nach einem der Ansprüche 8 bis 10, dadurch gekennzeichnet, daß die auf den Arretierbolzen (19) einwirkende Druckkraft durch Veränderung der Vorspannung der Druckfeder (24) einstellbar ist.

12. Schloß nach einem der Ansprüche 1 bis 11, dadurch gekennzeichnet, daß die Nummernscheiben (10) der Sperrvorrichtung (8) mit die Sperrzapfen (9) der Sperrvorrichtung (8) mindestens teilweise aufnehmenden, aber deren Durchschieben verhindernden Scheintoren (34) versehen sind.

13. Schloß nach Anspruch 1, dadurch gekennzeichnet, daß zwischen der ersten Nummernscheibe (10) der Sperrvorrichtung (8) und dem Gehäuse (12) des Schlosses, koaxial zu den Nummernscheiben (10) eine von einer Druckfeder (37), die in einer Aussparung (36) des Gehäuses (12) eingesetzt ist, radial verdrehbare Arretierscheibe (15) angeordnet ist, in deren stirnseitige Nut (38) der erste Sperrzapfen (9) des Auslösegliedes (14) in geöffnetem Zustand der Sperrvorrichtung (8) eingreift, und daß die Arretierscheibe (15) mit einem radialen Betätigungshebel (39) versehen ist, der durch ein Betätigungsfenster (40) des Schlosses hindurchragt.

14. Schloß auch Anspruch 13, dadurch gekennzeichnet, daß das Auslöseglied (4) als auf den Handbremshebel (2) aufsteckbare Hülse (41) ausgebildet ist, die in einem Betätigungsknopf (42) endet, an dessen Innenseite der Druckknopf (5) der Handbremse aufliegt.

15. Schloß nach Anspruch 13, dadurch gekennzeichnet, daß das Auslöseglied (4) als auf den Handbremshebel (2) aufsteckbare Hülse (41) ausgebildet ist, die in einem Betätigungsknopf (42) endet und die von einer im Inneren der Hülse (3) des Schlosses angeordneten Druckfeder (43) belastet ist.

16. Schloß nach einem der Ansprüche 1 bis 15, dadurch gekennzeichnet, daß das Schloß mit einer Einweg-Rohrschelle (44) am Handbremshebel (2) unlösbar befestigt ist.

17. Schloß nach einem der Ansprüche 1 bis 16, dadurch gekennzeichnet, daß eine Zwischenhülse (45) für Handbremshebel (2) mit kleinerem Durchmesser vorgesehen ist.

18. Schloß nach einem der Ansprüche 1 bis 17, dadurch gekennzeichnet, daß die Nummernscheiben (10) der Sperrvorrichtung (8) an ihren Stirnseiten mehrere mit der Numerierung der Nummernscheiben (10) gleichzahligen radialen Vertiefungen (46) aufweisen, die mit neben den Nummernscheiben (10) koaxial zu diesen angeordneten, je einen Vorsprung (47) aufweisenden Ringfedern (48) zusammenwirken, die die eingestellten Lagen der Nummernscheiben (10) sichern.

## Claims

1. Lock for hand brake levers of motor vehicles, comprising a sleeve (3) connected to the hand brake lever (2), a releasing member (4) moveable inside the sleeve (3) and connected to a push button (5) on said hand brake lever (2), and a blocking device (8) preventing the releasing member (4) from being moved while in the locking position, characterised in that the releasing member (4) is associated with a mechanism locking the opened position of the blocking device (8) after unlocking of the hand brake and preventing any change of this position.

2. Lock according to claim 1, characterised in that the mechanism preventing the readjustment of the blocking device (8) is provided with a cap (7) and a projection (15) cooperating with the cap (7) in the locking position, the projection (13) being provided on the housing (12) of the lock (1), wherein the cap (7) and the projection (13) are formed to move relative to each other.

3. Lock according to claim 2, characterised in that the projection (13) is provided on an end of the sleeve (3) facing the cap (7) and the cap (7) is provided with an edge (14), wherein the projection (13) and the edge (7) have the form of a thread of great pitch extending over half the periphery of the cap respectively the sleeve (3), and that the half-thread of the projection (13) is configured to cooperate with the half-thread of the cap (7) in the locking position.

4. Lock according to claim 1, characterised in that a rotation braking step is arranged on the half-thread surfaces of the projection (13) and the edge (14) moving relative to each other.

5. Lock according to claim 3 or claim 4, characterised in that in the axial direction, the pitch of the half-thread of the projection (13) and of the edge (14) is smaller than the thickness of a dial disk of the blocking device.

6. Lock according to claim 1, characterised in that a rotatable locking disk is provided between the first dial disk (10) of the blocking device (8) and the housing (12) of the lock (1), the disk being co-axial with the dial disks and having a shoulder (16) bearing against a blocking pin (9) of the blocking device (8) when in the locking position, wherein the annular shoulder (16) extends over half the locking disk and has a thickness smaller than that of one the dial disks (10).

7. Lock according to claim 6, characterised in that an external groove (17) is provided on the locking disk (15).

8. Lock according to claim 1, characterised in that near the releasing member's (4) end facing the push button (5) of the hand brake lever (2) there is provided a locking pin (19) in a through bore (18) extending perpendicular to the longitudinal axis, wherein the locking pin (19) rests on the inner end (27) of a longitudinal groove provided in the sleeve (3) of the lock (1) and cooperates with an externally actuated releasing pin (29) for shifting the locking pin out of the longitudinal groove (26).

9. Lock according to claim 8, characterised in that the locking pin (19) is provided with a head (20) having a diameter exceeding that of the other sections, resting on a diameter inside step of the through bore (18) and being loaded by a compression spring (24).

10. Lock according to claim 8 or claim 9, charac-

EP 0 235 349 B1

13

terised in that at the inner end (27) of the longitudinal groove (26) the externally actuated releasing-pin (29) is mounted in a bore (28) extending through the handle of the hand brake lever (2), wherein the outer end (33) of the releasing pin (29) is disposed in the form of a knob inside an arched recess (32) of the handle, and that the pin is loaded by a compression spring (30) in the direction of the arched recess (32).

11. Lock according to one of the claims 8 - 10, characterised in that the pressure force acting upon the locking pin (19) can be adjusted by changing the biasing force generated by the compression spring (24).

12. Lock according to one of the claims 1 - 11, characterised in that the dial disks (10) of the locking device (8) are provided with blind passageways (34) accommodating the blocking pins (9) of the blocking device (8) at least partially but preventing the full displacement of the blocking pin (9).

13. Lock according to claim 1, characterised in that between the first of the dial disks (10) of the blocking device (8) and the housing (12) of the lock (1) there is mounted a locking disk (15) rotatable in the radial direction under the force of a compression spring (37) mounted in a recess (36) of the housing (12), the first blocking pin (9) of the releasing member (4) engaging the front groove (38) when the blocking device (8) is in the open position, and that the locking disk (15) is provided with a radially extending actuating lever (39) protruding through an actuating window (40) of the lock (1).

14. Lock according to claim 13, characterised in that the releasing member (4) is a sleeve (41) adapted to be pushed over the hand brake lever (2), the sleeve (41) ending in the form of an actuating knob (42) on the inside of which the push button (5) of the hand brake is engaged.

15. Lock according to claim 13, characterised in that the releasing member (4) is a sleeve (41) adapted to be pushed over the hand brake lever (2), the sleeve (41) ending in the form of an actuating knob (42) and being loaded by a compression spring (43) arranged inside the sleeve (3) of the lock (1).

16. Lock according to one of the claims 1 - 14, characterised in that the lock is securely affixed to the hand brake lever (2) by means of a one-way clamp.

17. Lock according to one of the claims 1 - 16, characterised in that there is provided an intermediate sleeve (45) for hand brake levers (2) of reduced diameter.

18. Lock according to one of the claims 1 - 17, characterised in that the dial disks (10) of the

14

blocking device (8) have a plurality, equal to the quantity of numbers of the dial disks, of radial indentations (46) on their front faces, the indentations cooperating with annular springs (46), arranged next to the dial disks (10) coaxially thereto and each having a projection (47), the annular springs (48) securing the adjusted position of the dial disks (10).

**Revendications**

1. Serrure pour levier de frein à main de véhicules automobiles comportant un manchon (3) fixé au levier de frein à main (2), un élément de libération (4) mobile dans celle-ci, fixé à un bouton poussoir (5) du levier de frein à main (2), et un dispositif de verrouillage (8) empêchant le déplacement de l'élément de libération (4) à l'état fermé, caractérisée en ce qu'un mécanisme qui bloque à l'état ouvert le dispositif de verrouillage (6) après la libération du frein à main et qui empêche le changement de réglage à partir de cet état, est affecté à l'élément de libération.

2. Serrure selon la revendication 1, caractérisée en ce que le mécanisme qui empêche le changement de réglage du dispositif de verrouillage présente une coiffe (7) et une saillie (13) coopérant avec celle-ci en position de blocage, prévue sur le corps (12) de la serrure (1), la coiffe (7) et la saillie (13) étant conformées de manière à être mobiles l'une par rapport à l'autre.

3. Serrure selon la revendication 2, caractérisée en ce que la saillie (13) est formée à l'extrémité du manchon (3) dirigée vers le coiffe (7) et que la coiffe (7) présente un bord (14), la saillie (13) est le bord (14) ayant la forme d'un filet à fort pas qui s'étend sur la moitié du pourtour de la coiffe (7), respectivement du manchon (3), et que le demi-filet de la saillie (13) est exécuté de façon telle qu'il coopère avec le demi-filet de la coiffe (7) en position de blocage.

4. Serrure selon la revendication 3, caractérisée en ce qu'un degré rendant la rotation difficile est formé sur les surfaces mobiles des demi-filets de la saillie (13) et du bord (14).

5. Serrure selon la revendication 3 ou 4, caractérisée en ce que le pas du demi-filet de la saillie (13) et de celui du bord (14) est plus faible dans le sens de l'axe, que l'épaisseur d'un disque portant des chiffres (10) du dispositif de verrouillage.

6. Serrure selon la revendication 1, caractérisée en ce qu'entre le premier disque portant des chiffres (10) du dispositif de verrouillage (8) et le corps (12) de la serrure (1), un disque de blocage (15) est disposé de manière à pouvoir être tourné coaxialement aux disques portant des chiffres (10), lequel présente un épaulement (16) qui, en position de blocage porte sur un des tenons de verrouillage (9) du dispositif de verrouillage (8), l'épaulement annulaire (16) s'étendant sur la moitié du disque de verrouillage et présentant une épaisseur plus faible que celle d'un disque portant des chiffres (10).

7. Serrure selon la revendication 6, caractérisée en ce que le disque de blocage (15) est muni de stries (17) sur l'extérieur.

8. Serrure selon la revendication 1, caractérisée en ce qu'à l'extrémité de l'organe de libération (4) dirigée vers le bouton poussoir (5) du levier de frein à main 2, est disposé un boulon lisse de blocage (19) dans un trou traversant (18) perpendiculaire à l'axe longitudinal, le boulon lisse de blocage (19) portant, en position de blocage sur l'extrémité intérieure (27) d'une gorge longitudinale (26) formée dans le manchon (3) de la serrure (1) et coopérant avec un boulon de libération (29) susceptible d'être actionné de l'extérieur, en vue de le repousser hors de la gorge longitudinale (26).

9. Serrure selon la revendication 8, caractérisée en ce que le boulon de blocage (19) présente une tête dont le diamètre déborde de la partie restante, laquelle, en position d'arrêt porte sur un degré intérieur pratiqué dans le diamètre du trou traversant (18) et est placée sous l'effet d'un ressort de compression (24).

10. Serrure selon la revendication 8 ou 9, caractérisée en ce que le boulon de libération (29) susceptible d'être actionné de l'extérieur est disposé à l'extrémité intérieure (27) de la gorge longitudinale (26), dans un trou (28) traversant la poignée du levier de frein à main (2), l'extrémité extérieure (33) du boulon de libération (29) étant prévue sous forme d'un bouton dans un creux arrondi (32) de la poignée et le boulon étant placé sous l'effet d'un ressort de compression (30) en direction du creux arrondi (32).

11. Serrure selon une des revendications 8 à 10, caractérisée en ce que la force de compression agissant sur le boulon de blocage (19) peut être réglée en modifiant la compression préalable du ressort de compression (24).

12. Serrure selon une des revendications 1 à 11, caractérisée en ce que les disques portant des chiffres (10) appartenant au dispositif de verrouillage (8) sont munis de fausses portes (34) qui reçoivent au moins partiellement les tenons de verrouillage (9) du dispositif de verrouillage (8) mais qui empêchent qu'ils traversent.

13. Serrure selon la revendication 1, caractérisée en ce qu'entre le premier disque portant des chiffres (10) appartenant au dispositif de verrouillage (8) et le corps (12) de la serrure un disque de blocage (15) susceptible de tourner radialement sous l'effet d'un ressort de compression (37) qui est installé dans un évidement (36) du corps (12), est disposé coaxialement aux disques portant des chiffres (10), et que dans la gorge (38) située du côté frontal de celui-ci, pénètre le premier tenon de verrouillage (9) de l'élément de libération (14), lorsque le dispositif de verrouillage (8) est à l'état ouvert, et que le disque de blocage (15) est muni d'un levier d'actionnement radial (39) qui dépasse dans une fenêtre d'actionnement (40) de la serrure.

14. Serrure selon la revendication 13, caractérisée en ce que l'élément de libération (4) a la forme d'un manchon (41) susceptible d'être enfilé sur le levier de frein à main (2) et se termine par un bouton d'actionnement (42) sur le côté intérieur duquel porte le bouton poussoir (5) du frein à main.

15. Serrure selon la revendication 13, caractérisée en ce que l'élément de libération (4) a la forme d'un manchon (41) susceptible d'être enfilé sur le levier de frein à main (2), qui se termine par un bouton d'actionnement (42) et qui est placé sous l'effet d'un ressort de compression (43) disposé à l'intérieur du manchon (3) de la serrure.

16. Serrure selon une des revendications 1 à 15, caractérisée en ce que la serrure est fixée au levier de frein à main (2) de façon indémontable au moyen d'un collier de serrage pour tube (44) fonctionnant dans un seul sens.

17. Serrure selon une des revendications 1 à 16, caractérisée en ce qu'un manchon intermédiaire (45) est prévu pour le levier de frein à main (2) ayant un diamètre plus faible.

18. Serrure selon une des revendications 1 à 17, caractérisée en ce que les disques portant des chiffres (10) du dispositif de verrouillage (8) présentent sur leurs côtés frontaux plusieurs évidements radiaux (46) dont le nombre est le même que celui de la numérotation des disques portant des chiffres (10), lesquels coopèrent avec des ressorts annulaires (48) disposés coaxialement à côté des disques portant des chiffres (10) et présentant chacun une saillie (47), qui fixent de façon sûre les positions des disques portant des chiffres (10) telles qu'elles ont été réglées.

Fig.1

Fig.2

Fig. 3

Fig. 4

Fig.5

Fig.6

Fig.7

Fig.8

Fig. 9

X – X

Fig.10

XII – XII

Fig.12

XI – XI

Fig.11

XIII – XIII

Fig.13

Fig.14

Fig.16

Fig.15